# FASCICULE DE BREVET EUROPEEN

(11) **EP 3 236 822 B1**
(45) Date de publication et mention de la délivrance du brevet: **30.01.2019**
(21) Numéro de dépôt: 15823361.9
(22) Date de dépôt: 18.12.2015
(51) Int. Cl.: A47J 37/06, A47J 37/07, A23B 4/044

(54) **ACCESSOIRE DE DIFFUSION DE FUMÉE POUR BARBECUE ÉLECTRIQUE**
RAUCHVERBREITENDES ZUBEHÖR FÜR ELEKTRISCHEN GARTENGRILL
SMOKE-DIFFUSING ACCESSORY FOR ELECTRIC BARBECUE

(30) Priorité: 23.12.2014 FR 1463189
(43) Date de publication de la demande: 01.11.2017
(73) Titulaire: SEB S.A., 69130 Ecully (FR)
(72) Inventeur: VOLATIER, Sébastien, 21000 Dijon (FR); LETAIN, François, 21120 Marcilly-sur-Tille (FR)
(74) Mandataire: Bourrières, Patrice
(86) Numéro de dépôt international: PCT/FR2015/053641
(87) Numéro de publication internationale: WO 2016/102852

(56) Documents cités:
- US-A1- 2010 071 566
- US-B2- 8 042 459

## Description

La présente invention concerne de manière générale les barbecues.

Plus particulièrement l'invention concerne un accessoire pour diffuser des arômes dans un barbecue.

Il est connu dans l'art antérieur des barbecues qui comprennent des accessoires de diffusion de fumée comme en particulier ceux divulgués dans les documents US8042459, US7832330 ou US2010071566. Dans ces documents, les accessoires de diffusion de fumée ont pour but de produire de la fumée pour aromatiser les aliments. Cependant on rencontre différents inconvénients avec de tels dispositifs. Un inconvénient rencontré dans le document US8042459 qui décrit un barbecue électrique, réside dans le fait que l'accessoire de diffusion de fumée comprend une grande surface en contact avec la résistance électrique ce qui peut provoquer des risques d'inflammations car la combustion des matériaux compris dedans n'est pas maitrisée.

Dans le document US7832330 l'accessoire de diffusion de fumée est excentré de la source de chaleur mais un inconvénient rencontré alors est que, pour excentrer cet accessoire de diffusion de fumée, il est nécessaire d'avoir un dispositif annexe qui se positionne sur la grille de cuisson et qui réduit alors considérablement la surface de cuisson des aliments sur cette grille.

Dans le document US2010071566, l'accessoire de diffusion de fumée est excentré et soumis à une température plus élevée que la température de cuisson des aliments, ce qui réduit la surface de cuisson et peut provoquer des risques d'inflammations car la combustion des matériaux compris dedans n'est pas maitrisée.

Un but de la présente invention est de répondre aux inconvénients de l'art antérieur mentionnés ci-dessus et en particulier de proposer un accessoire de diffusion de fumée dans lequel la combustion des matériaux est maitrisée, c'est-à-dire qu'il n'y ait pas d'inflammation des matériaux et un accessoire de diffusion de fumée qui puisse s'adapter à un barbecue de manière à conserver une surface maximale de cuisson sur une grille de cuisson du barbecue.

Pour cela un premier aspect de l'invention concerne un accessoire de diffusion de fumée adapté pour fonctionner avec un barbecue, l'accessoire de diffusion de fumée formant un récipient pouvant contenir des matériaux générateurs de fumée et comprenant un couvercle qui coopère avec le récipient pour former une enceinte fermée, le couvercle comprenant des trous calibrés afin de réguler l'apport en oxygène dans l'enceinte, l'accessoire de diffusion de fumée étant caractérisé en ce qu'il comprend un moyen de suspension pour suspendre verticalement l'accessoire de diffusion de fumée dans le barbecue pour que les trous calibrés soient orientés vers le haut.

L'intérêt d'un moyen de suspension est d'avoir un système qui prend peu de place pour positionner un accessoire de diffusion de fumée dans un barbecue.

En outre le fait d'avoir un accessoire de diffusion de fumée fermé facilite la montée de la température dans l'enceinte et évite aux graisses de se mélanger avec les matériaux de combustion.

Les trous calibrés ont pour utilité de réguler l'apport en oxygène dans l'enceinte en permettant un apport maitrisé de l'oxygène dans l'enceinte pour éviter les inflammations.

Selon un premier mode de réalisation du moyen de suspension, celui-ci est positionné sur le couvercle.

Selon un mode de réalisation, le couvercle comprend une anse et le moyen de suspension comprend deux points de contacts positionnés à la base de cette anse. L'intérêt d'intégrer le moyen de suspension à l'anse est d'avoir deux fonctions en une seule et de diminuer le cout de revient.

Selon un mode de réalisation, le couvercle comprend un dispositif de protection qui s'élève au dessus du couvercle et qui recouvre entièrement les trous calibrés. Ce dispositif de protection évite que des graisses ou des projections pénètrent dans l'enceinte par les trous calibrés du couvercle.

Selon un deuxième mode de réalisation du moyen de suspension, l'accessoire de diffusion de fumée comprend une paroi de fond et une paroi latérale entourant la paroi de fond et le moyen de suspension est positionné sur la paroi latérale. L'avantage d'un tel mode de réalisation est d'avoir un accessoire de diffusion de fumée qui est bien suspendu verticalement.

Selon un mode de réalisation, la paroi de fond et/ou la paroi latérale comprennent des ouvertures adaptées à réguler l'apport en oxygène à l'intérieur du récipient. De cette manière le front de la combustion se déplace lentement du couvercle vers le fond de l'accessoire de diffusion de fumée.

Un deuxième aspect de l'invention concerne un barbecue comprenant une cuve, une résistance électrique coudée, une grille de cuisson positionnée au dessus de la résistance électrique coudée et un accessoire de diffusion de fumée selon l'une des caractéristiques précitées caractérisé en ce que l'accessoire de diffusion de fumée est suspendu verticalement par le moyen de suspension en dessous de la grille de cuisson, au centre de la cuve, et au milieu de la résistance électrique coudée, de manière à ce que celle-ci entoure au moins en partie l'accessoire de diffusion de fumée.

L'avantage apporté est d'avoir un barbecue dont la totalité de la surface de sa grille de cuisson est dédiée à la cuisson des aliments et un accessoire de diffusion de fumée qui grâce à la proximité de la résistance électrique coudée va provoquer la combustion lente des matériaux et cela sans risque d'inflammations de ceux-ci étant donné la construction de l'accessoire de diffusion de fumée.

Selon le premier mode de réalisation, le moyen de suspension coopère avec la résistance électrique coudée de manière à suspendre l'accessoire de diffusion de fumée au centre de la cuve. L'intérêt d'avoir un accessoire de diffusion positionné verticalement au centre de la cuve est fait pour favoriser la diffusion des arômes, de manière homogène, vers la périphérie du barbecue.

Selon le deuxième mode de réalisation, l'accessoire de diffusion de fumée est suspendu par un montage en contrainte de l'accessoire de diffusion de fumée contre la résistance électrique coudée de manière à ce que la paroi latérale et la résistance électrique coudée comprennent au moins deux points d'accroche ponctuels.

Selon un mode de réalisation, le barbecue comprend un couvercle adapté à recouvrir entièrement la cuve et le couvercle comporte des ouïes positionnées symétriquement afin d'obtenir une diffusion homogénéisée de la fumée.

L'intérêt que ces ouïes soient positionnées de manière symétrique est que l'on peut homogénéiser l'aromatisation, du centre du barbecue vers la périphérie de celui-ci.

Selon un mode de réalisation, le barbecue comprend un réflecteur; le réflecteur peut se positionner dans la cuve au dessus de la résistance électrique coudée et en dessous de la grille de cuisson de manière à obtenir une cuisson indirecte ou le réflecteur peut être ôté de manière à obtenir une cuisson directe des aliments. Le réflecteur permet ainsi d'avoir un mode de cuisson indirecte avec le barbecue c'est-à-dire qu'il permet de protéger les aliments d'un rayonnement direct de la résistance électrique.

Selon un mode de réalisation, le réflecteur est de forme conique et comprend une ouverture en son centre de manière à évacuer les graisses provenant des aliments positionnés sur la grille de cuisson et l'ouverture est dimensionnée de manière à ce que l'accessoire de diffusion de fumée puisse passer dans l'ouverture. L'intérêt d'avoir cette ouverture au milieu du réflecteur est de pouvoir continuer à évacuer les graisses et à diffuser de la fumée lorsque le barbecue est utilisé dans le mode de cuisson indirecte.

Selon un mode de réalisation, la cuve comprend une ouverture au fond afin d'évacuer les graisses de cuisson hors de la cuve et un récipient récupérateur de graisse positionné en face de l'ouverture du fond. De cette manière les graisses ne sont pas perdues et sont réutilisables ou jetables.

Selon un mode de réalisation le barbecue comprend un dispositif de protection positionné sur la grille de cuisson et au dessus de l'accessoire de diffusion de manière à ce que les graisses ne s'écoulent pas dans l'accessoire de diffusion.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue éclatée en perspective du barbecue ;
- la figure 2 est une vue de l'accessoire de diffusion de fumée ;
- la figure 3 est une vue en coupe de l'accessoire de diffusion de fumée selon le premier mode de réalisation ;
- la figure 4 est une vue de l'accessoire de diffusion de fumée selon le deuxième mode de réalisation ;
- la figure 5 est un graphique de la cinétique des températures dans l'accessoire de diffusion de fumée ;
- la figure 6 est une vue en perspective du barbecue électrique dans un mode de cuisson direct ;
- la figure 7 est une vue en perspective du barbecue électrique dans un mode de cuisson indirect ;

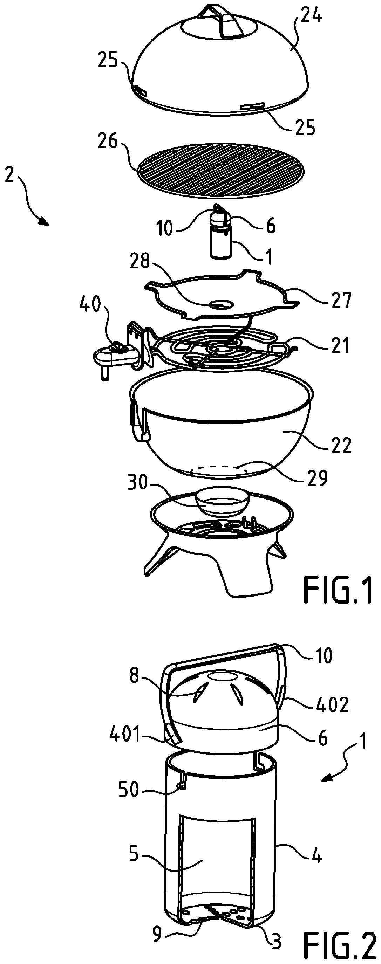

Comme visible à la figure 1, un barbecue 2 comprend une cuve 22, une résistance électrique 21 coudée, une grille de cuisson 26 et un accessoire 1 de diffusion de fumée. La grille de cuisson 26 est positionnée dans la cuve 22 ou au dessus de la cuve 22 et au dessus de la résistance électrique 21 coudée. La cuve 22 a une forme de demi-sphère et comprend des cales intérieures sur lesquelles la grille de cuisson 26 vient en appui. De cette manière la grille de cuisson 26 et la résistance électrique 21 sont espacées de 10mm.

La résistance électrique 21 coudée peut être circulaire ou rectiligne et comporter un ou plusieurs coudes de manière à avoir un ou plusieurs brins.

L'accessoire 1 de diffusion de fumée est positionné sous la grille de cuisson 26.

Le barbecue 2 comprend un couvercle 24 et ce couvercle 24 est adapté à recouvrir entièrement la cuve 22. Le couvercle 24 comporte des ouïes 25 et ces ouïes sont positionnées en périphérie du couvercle 24. Ces ouïes 25 sont positionnées tous les 90°, de manière symétrique, pour obtenir une diffusion homogénéisée de la fumée.

Le barbecue 2 comprend un réflecteur 27 visible à la figure 1.

Ce réflecteur 27 comprend deux positions différentes dans la cuve 22.

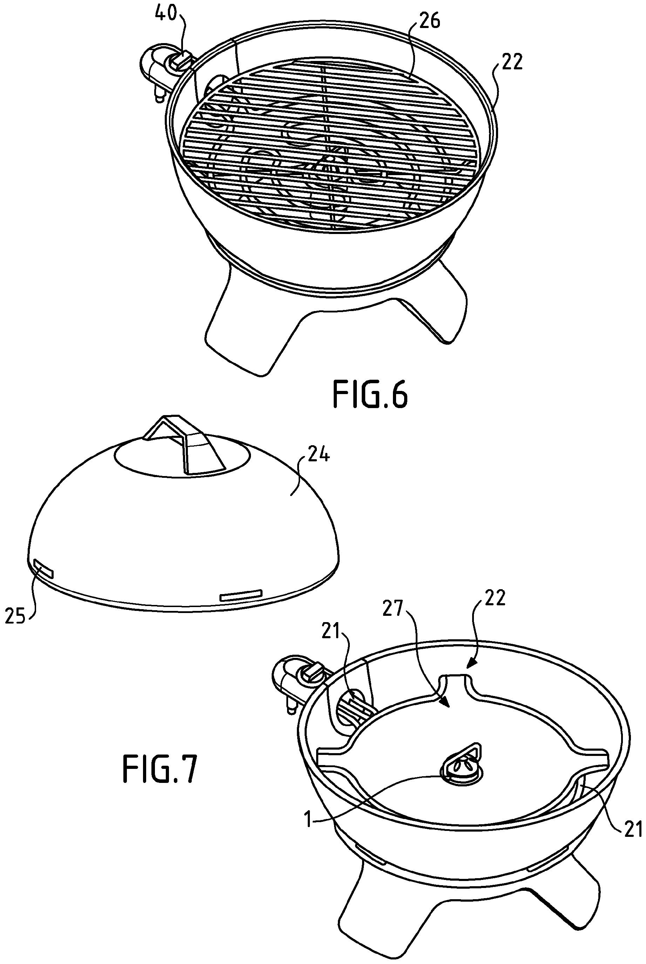

Dans une position visible à la figure 6, le réflecteur 27 est enlevé de manière à obtenir une cuisson directe des aliments par un rayonnement direct.

Comme maintenant visible à la figure 7, le réflecteur 27 peut se positionner dans la cuve 22 au dessus de la résistance électrique 21 coudée et en dessous de la grille de cuisson 26. De cette manière on obtient une cuisson indirecte des aliments car la résistance électrique 21 coudée ne rayonne pas directement sur les aliments et le réflecteur 27 protège ces derniers du rayonnement direct de la résistance.

Dans cette configuration les brins extérieurs de la résistance électrique 21 coudée sont apparents pour accentuer le chauffage du couvercle 24.

Dans l'exemple de la figure 7, la grille de cuisson 26 se pose sur le réflecteur 27 qui sert de rehausseur à celle-ci et le réflecteur 27 comprend un bord périphérique rehausseur qui se pose sur les cales intérieures de la cuve 22. Ainsi la grille de cuisson 26 est maintenant éloignée de 25mm de la résistance électrique 21 coudée dans cette configuration. Ce bord périphérique rehausseur permet d'éloigner la grille de cuisson 26 de la résistance électrique 21 coudée et d'avoir un réflecteur 27 conique qui permet de drainer les graisses et qui soit positionnable entre la grille de cuisson 26 et la résistance électrique 21 coudée.

Afin de pouvoir utiliser l'accessoire 1 de diffusion de fumée, le réflecteur 27 comprend une ouverture 28 en son centre. De cette manière le réflecteur 27 permet d'évacuer les graisses provenant des aliments positionnés sur la grille de cuisson 26 et l'ouverture 28 est dimensionnée de manière à ce que l'accessoire 1 de diffusion de fumée puisse passer en entier dans l'ouverture 28.

Selon l'invention le réflecteur 27 est de forme conique afin de canaliser les graisses de cuisson vers l'ouverture 28 avec une pente minimum de 7° pour évacuer les graisses, par caléfaction, vers le centre de la cuve 22.

En outre le réflecteur 27 peut comporter des ouïes périphériques pour permettre à la chaleur d'accéder au couvercle 24.

Afin de récupérer ces graisses, la cuve 22 comprend une ouverture 29 au fond de celle-ci et un récipient récupérateur de graisse 30. Celui-ci est positionné en face de l'ouverture 29 de la cuve 22 de manière à collecter les graisses de cuisson.

Comme visible à la figure 2, l'accessoire 1 de diffusion de fumée comprend une paroi de fond 3 et une paroi latérale 4 entourant la paroi de fond 3 de manière à former un récipient 5 pouvant contenir des matériaux générateurs de fumée. Ces matériaux peuvent être des copeaux de bois ou des épices. Le poids acceptable de matériaux dans le récipient 5 est de 50g à 100g.

La paroi de fond 3 et/ou la paroi latérale 4 comprennent des ouvertures 9 qui sont calibrées afin de réguler l'apport en oxygène à l'intérieur du récipient 5.

L'accessoire 1 de diffusion de fumée comprend également un couvercle 6 adapté à coopérer avec la paroi latérale 4 de manière à fermer le récipient 5 et à former une enceinte fermée. L'accessoire 1 de diffusion forme alors un cylindre. Dans d'autres variantes, il peut former un carré, ou un rectangle.

Le système de fermeture du couvercle 6 peut être un système de fermeture à baïonnettes 50.

Le couvercle 6 comprend des trous calibrés 8 et ces trous calibrés 8 permettent de réguler l'apport en oxygène dans le récipient 5.

Le couvercle 6 comprend un dispositif de protection qui s'élève au dessus du couvercle 6. (non représenté) Ce dispositif de protection s'étend à partir du couvercle 6 et forme une protection au dessus des trous calibrés 8 afin que des graisses ou des déchets ne puissent pas rentrer dans l'enceinte par les trous calibrés 8. Il recouvre entièrement les trous calibrés 8 du couvercle 6. Celui-ci peut être en forme de parapluie.

En complément ou en variante, le barbecue 2 comprend un dispositif de protection (non représenté) positionné sur la grille de cuisson 26 et au dessus de l'accessoire 1 de diffusion. Celui-ci recouvre les trous calibrés 8 du couvercle 6 de manière à ce que les graisses ne s'écoulent pas dans l'accessoire 1 de diffusion. Celui-ci peut être une rondelle métallique ou une pastille en métal.

Le couvercle 6 comprend également une anse 10 qui s'étend au dessus du couvercle 6. Cette anse 10 sert à la manipulation de l'accessoire 1 de diffusion de fumée.

Afin de générer de la fumée pour aromatiser les aliments, l'accessoire 1 de diffusion de fumée est suspendu par un moyen de suspension dans le barbecue 2 au plus près de la résistance électrique 21 coudée mais avec le moins de contact possible pour éviter tout risque d'inflammation.

Par moyen de suspension on entend un moyen principal ou secondaire qui est adapté à suspendre verticalement l'accessoire 1 de diffusion de fumée dans le barbecue pour que la partie supérieure de la paroi latérale 4 soit en vis-à-vis de un ou plusieurs brins de la résistance électrique 21.

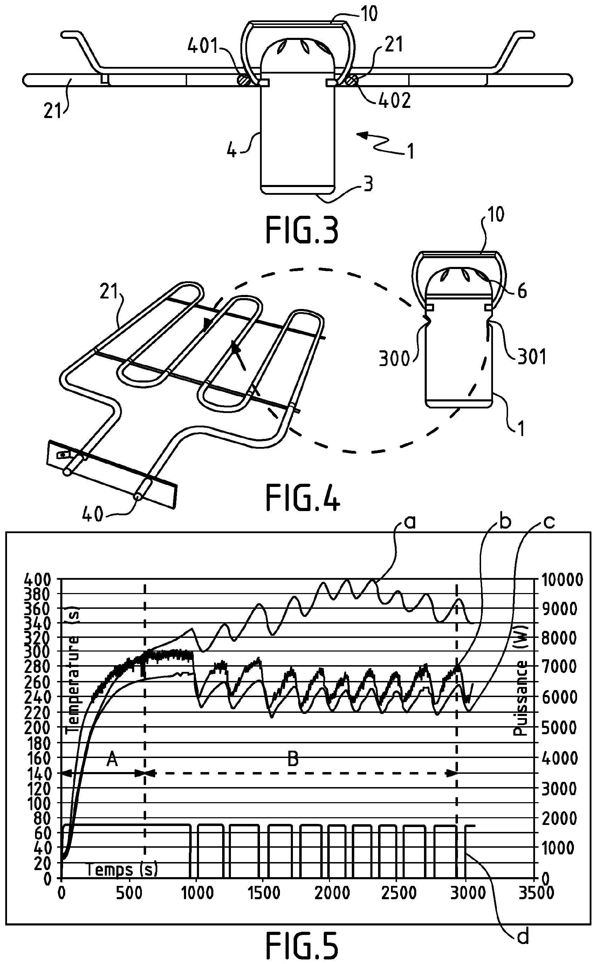

Selon le premier mode de réalisation du moyen de suspension visible à la figure 3, celui-ci est constitué par une partie de l'anse 10 et plus particulièrement par deux points de contacts 401, 402 positionnés à la base de cette anse 10. Ceux ci coopèrent ponctuellement avec la résistance électrique 21 coudée de manière à retenir et à suspendre verticalement l'accessoire 1 de diffusion de fumée dans la cuve 22. Les dimensions de l'anse 10 sont donc conçues pour avoir deux points de contacts 401, 402 qui viennent en appui de la résistance électrique 21 coudée. De cette manière la paroi latérale 4 de l'accessoire 1 de diffusion de fumée ne comporte pas de point de contact avec la résistance électrique 21 coudée mais se trouve en vis-à-vis de la résistance électrique 21 coudée.

Au niveau des points de contact 401, 402 ponctuels, on peut avoir un renfoncement au niveau de l'anse 10 afin d'augmenter la surface de contact entre l'anse 10 et la résistance électrique 21 coudée ce qui permet de faciliter le positionnement vertical de l'accessoire 1 de diffusion de fumée.

Selon le second mode de réalisation du moyen de suspension visible à la figure 4, l'accessoire 1 de diffusion de fumée est suspendu par un montage en contrainte de l'accessoire 1 de diffusion de fumée dans la résistance électrique 21 coudée. Plus particulièrement le montage en contrainte se fait entre au moins deux brins de la résistance électrique 21 coudée de manière à ce que la paroi latérale 4 et la résistance électrique 21 coudée comprennent au moins deux points d'accroche ponctuels 300, 301.

Ces points d'accroche ponctuels 300, 301 peuvent comprendre des renfoncements qui facilitent la mise en place de l'accessoire 1 de diffusion de fumée entre les brins de la résistance électrique 21 coudée.

Dans un cas comme dans l'autre, l'accessoire 1 de diffusion de fumée est suspendu par le moyen de suspension en dessous de la grille de cuisson 26 et au milieu de la résistance électrique 21 coudée, de manière à ce que celle-ci entoure au moins en partie la paroi latérale 4 de l'accessoire 1 de diffusion de fumée sans provoquer d'échauffement suffisant pour enflammer les matériaux dans l'enceinte.

Dans un mode de fonctionnement du barbecue 2, il est tout d'abord nécessaire de remplir l'accessoire 1 de diffusion de fumée de matériaux pour parfumer comme des copeaux de bois sec ou des épices. L'utilisateur ferme ensuite le couvercle 6 de l'accessoire 1 de diffusion de fumée grâce au système de fermeture à baïonnettes 50 afin de former l'enceinte puis positionne, par l'intermédiaire du système de suspension, l'accessoire 1 de diffusion de fumée verticalement au centre de la cuve 22 du barbecue 2 et au milieu de la résistance électrique 21 coudée.

De cette manière la proximité de l'accessoire 1 de diffusion de fumée avec la résistance électrique 21 coudée provoquera une étape de combustion lente (sans inflammation) des copeaux de bois ou des épices.

Le récipient 5 de l'accessoire 1 de diffusion de fumée étant positionné perpendiculairement au plan de la résistance électrique 21 coudée cela permet de retarder la combustion. Dans ce cas de figure le front de la combustion se déplace lentement du couvercle 6 (à hauteur de la résistance) vers la paroi de fond 3 de l'accessoire 1 de diffusion de fumée. La longueur du corps de l'accessoire 1, contenant les copeaux, conditionne la durée du dégagement des fumées.

Dans une étape suivante le couvercle 24 du barbecue 2 est fermé et grâce au couvercle 24 du barbecue 2, l'étape d'aromatisation pourra commencer. Celle ci sera lente, progressive, avec un juste contrôle de l'humidité, on parlera de fumage à chaud, contrairement aux méthodes utilisées pour conserver les aliments par fumage à froid.

L'étape suivante est une étape de préchauffage qui doit durer environ 15 minutes jusqu'à l'apparition des premières fumées, puis les aliments peuvent être déposés sur la grille de cuisson 26 dans une étape ultérieure. Avec une telle construction, l'étape d'aromatisation pourra commencer et prendra entre 20 et 40 minutes.

La figure 5 décrit en détail la cinétique des températures en lien avec l'aromatisation à l'intérieur de l'accessoire 1 de diffusion de fumée et dans laquelle l'étape A correspond à l'étape de préchauffage et l'étape B correspond à l'étape de production de fumée.

Comme la fumée peut être plus ou moins forte et apporter plus ou moins de goût il est nécessaire de maitriser la cinétique des températures.

A partir de 170°C le bois commence à se carboniser et les premières volutes de vraie fumée s'élèvent, indiquant le début de la pyrolyse. A ces basses températures, la fumée provenant de la combustion a une odeur âcre et un goût pas réellement intéressant à cause de la libération d'acide. C'est à partir de 200°C que la production d'acide diminue laissant place à des molécules aromatiques. L'effet de la pyrolyse atteint son apogée autour de 400°C, température idéale de fumage. Au-delà de 400°C les risques d'embrasement sont de plus en plus importants, avec une augmentation assez rapide de la température et une dégradation de la composition subtile de la fumée.

Sans étincelles pour faire partir l'inflammation, il est possible de prolonger la combustion sans flamme jusqu'à 500°C. L'astuce est de réguler la quantité d'air à l'intérieur de l'accessoire 1 de diffusion de fumée: plus on restreint l'apport en oxygène du bois qui se consume, moins les vapeurs sont susceptible de brûler, d'où l'intérêt d'avoir un apport calibré à la dimension de l'accessoire 1 de diffusion de fumée.

Ainsi dans la figure 5 on a la température de l'accessoire 1 de diffusion de fumée qui est représentée par la courbe supérieure a). La courbe se situant en dessous, la courbe b) représente la température d'ambiance du barbecue. La courbe du milieu, la courbe c) représente la température d'un régulateur 40 et la courbe d) représente la puissance du barbecue 2.

La température à l'intérieur de l'accessoire 1 de diffusion de fumée est donc inférieure à 450°C et ceci pour éviter les problèmes d'inflammation et de ce fait la production de composés cancérigènes sur l'aliment.

Pour optimiser les flaveurs des fumées, la température à l'intérieur de l'accessoire 1 de diffusion de fumée est régulée entre 250 et 400°C par l'intermédiaire du régulateur 40.

Le temps de l'étape B correspondant au dégagement de fumée est compris entre 20 et 40mn.

On comprendra que diverses modifications et/ou améliorations évidentes pour l'homme du métier peuvent être apportées au mode de réalisation de l'invention décrit dans la présente description sans sortir du cadre de l'invention défini par les revendications annexées.

## Revendications

1. Accessoire (1) de diffusion de fumée adapté pour fonctionner avec un barbecue (2), l'accessoire (1) de diffusion de fumée formant un récipient (5) pouvant contenir des matériaux générateurs de fumée, (et comprenant un couvercle (6) qui coopère avec le récipient (5) pour former une enceinte fermée, le couvercle (6) comprenant des trous calibrés (8) afin de réguler l'apport en oxygène dans l'enceinte, l'accessoire (1) de diffusion de fumée étant **caractérisé en ce qu'**il comprend un moyen de suspension pour suspendre verticalement l'accessoire (1) de diffusion de fumée dans le barbecue (2) pour que les trous calibrés (8) soient orientés vers le haut.

2. Accessoire (1) de diffusion de fumée selon la revendication précédente **caractérisé en ce que** le moyen de suspension est positionné sur le couvercle (6).

3. Accessoire (1) de diffusion de fumée selon la revendication précédente **caractérisé en ce que** le couvercle (6) comprend une anse (10) et le moyen de suspension comprend deux points de contacts (401, 402) positionnés à la base de cette anse (10).

4. Accessoire (1) de diffusion de fumée selon l'une des revendications 1 à 3 **caractérisé en ce que** le couvercle (6) comprend un dispositif de protection qui s'élève au-dessus du couvercle (6) et qui recouvre entièrement les trous calibrés (8) de manière à empêcher les graisses de pénétrer dans l'accessoire (1) de diffusion.

5. Accessoire (1) de diffusion de fumée selon la revendication 1 **caractérisé en ce qu'**il comprend une paroi de fond (3) et une paroi latérale (4) entourant la paroi de fond (3) et le moyen de suspension est positionné sur la paroi latérale (4).

6. Accessoire (1) de diffusion de fumée selon la revendication précédente **caractérisé en ce que** la paroi de fond (3) et/ou la paroi latérale (4) comprennent des ouvertures (9) adaptées à réguler l'apport en oxygène à l'intérieur du récipient.

7. Barbecue (2) comprenant une cuve (22), une résistance électrique (21) coudée, une grille de cuisson (26) positionnée au-dessus de la résistance électrique (21) coudée et un accessoire (1) de diffusion de fumée selon l'une des revendications précédentes **caractérisé en ce que** l'accessoire (1) de diffusion de fumée est suspendu verticalement par le moyen de suspension en dessous de la grille de cuisson (26), au centre de la cuve (22), et au milieu de la résistance électrique (21) coudée, de manière à ce que celle-ci entoure au moins en partie l'accessoire (1) de diffusion de fumée.

8. Barbecue (2) selon la revendication précédente **caractérisé en ce que** le moyen de suspension coopère avec la résistance électrique (21) coudée de manière à suspendre l'accessoire (1) de diffusion de fumée au centre de la cuve (22).

9. Barbecue (2) selon la revendication 8 **caractérisé en ce que** l'accessoire (1) de diffusion de fumée est suspendu par un montage en contrainte de l'accessoire (1) de diffusion de fumée contre la résistance électrique (21) coudée de manière à ce que la paroi latérale (4) et la résistance électrique (21) coudée comprennent au moins deux points d'accroche (300, 301) ponctuels.

10. Barbecue (2) selon l'une des revendications 7 à 9 **caractérisé en ce qu'**il comprend un couvercle (24) adapté à recouvrir entièrement la cuve (22) et le couvercle (24) comporte des ouïes (25) positionnées symétriquement afin d'obtenir une diffusion homogénéisée de la fumée.

11. Barbecue (2) selon l'une des revendications 7 à 10 **caractérisé en ce qu'**il comprend un réflecteur (27); le réflecteur (27) peut se positionner dans la cuve (22) au-dessus de la résistance électrique (21) coudée et en dessous de la grille de cuisson (26) de manière à obtenir une cuisson indirecte ou le réflecteur (27) peut être ôté de manière à obtenir une cuisson directe des aliments.

12. Barbecue (2) selon la revendication précédente **caractérisé en ce que** le réflecteur (27) est de forme conique et comprend une ouverture (28) en son centre de manière à évacuer les graisses provenant des aliments positionnés sur la grille de cuisson (26) et l'ouverture (28) est dimensionnée de manière à ce que l'accessoire (1) de diffusion de fumée puisse passer dans l'ouverture (28).

13. Barbecue (2) selon l'une des revendications 7 à 12 **caractérisé en ce que** la cuve (22) comprend une ouverture (29) au fond afin d'évacuer les graisses de cuisson hors de la cuve (22) et un récipient récupérateur de graisse (30) positionné en face de l'ouverture (29) du fond.

14. Barbecue (2) selon l'une des revendications 7 à 13 **caractérisé en ce qu'**il comprend un dispositif de protection positionné sur la grille de cuisson (26) et au-dessus de l'accessoire (1) de diffusion de manière à ce que les graisses ne s'écoulent pas dans l'accessoire (1) de diffusion.

## Patentansprüche

1. Zubehörteil (1) zur Verteilung von Rauch, das eingerichtet ist, um mit einem Grill (2) zu funktionieren, wobei das Zubehörteil (1) zur Verteilung von Rauch einen Behälter (5) bildet, der Rauch erzeugende Materialien enthalten kann, (und eine Abdeckung (6) umfasst, die mit dem Behälter (5) zusammenwirkt, um eine geschlossene Kammer zu bilden, wobei die Abdeckung (6) kalibrierte Löcher (8) zum Regulieren der Sauerstoffzufuhr in die Kammer umfasst, und wobei das Zubehörteil (1) zur Verteilung von Rauch **dadurch gekennzeichnet ist, dass** es ein Aufhängungsmittel zum vertikalen Aufhängen des Zubehörteils (1) zur Verteilung von Rauch in dem Grill (2) umfasst, so dass die kalibrierten Löcher (8) nach oben gerichtet sind.

2. Zubehörteil (1) zur Verteilung von Rauch nach dem vorhergehenden Anspruch, **dadurch gekennzeichnet, dass** das Aufhängungsmittel an der Abdeckung (6) positioniert ist.

3. Zubehörteil (1) zur Verteilung von Rauch nach dem vorhergehenden Anspruch, **dadurch gekennzeichnet, dass** die Abdeckung (6) einen Griff (10) umfasst, und dass das Aufhängungsmittel zwei Kontaktpunkte (401, 402) umfasst, die an der Basis dieses Griffs (10) positioniert sind.

4. Zubehörteil (1) zur Verteilung von Rauch nach einem der Ansprüche 1 bis 3, **dadurch gekennzeichnet, dass** die Abdeckung (6) eine Schutzvorrichtung umfasst, die sich über die Abdeckung (6) erhebt und die die kalibrierten Löcher (8) vollständig bedeckt, um zu verhindern, dass Fette in das Zubehörteil (1) zur Verteilung eindringen.

5. Zubehörteil (1) zur Verteilung von Rauch nach Anspruch 1, **dadurch gekennzeichnet, dass** es eine Bodenwand (3) und eine Seitenwand (4) umfasst, die die Bodenwand (3) umgibt, und dass das Aufhängungsmittel auf der Seitenwand (4) positioniert ist.

6. Zubehörteil (1) zur Verteilung von Rauch nach dem vorhergehenden Anspruch, **dadurch gekennzeichnet, dass** die Bodenwand (3) und / oder die Seitenwand (4) Öffnungen (9) umfassen, die eingerichtet sind, die Zufuhr von Sauerstoff innerhalb des Behälters zu regulieren.

7. Grill (2), umfassend eine Wanne (22), einen gebogenen elektrischen Widerstand (21), einen oberhalb des gebogenen elektrischen Widerstands (21) positionierten Grillrost (26) und ein Zubehörteil (1) zur Verteilung von Rauch nach einem der vorhergehenden Ansprüche, **dadurch gekennzeichnet, dass** das Zubehörteil (1) zur Verteilung von Rauch durch das Aufhängungsmittel unterhalb des Grillrosts (26) in der Mitte der Wanne (22) und in der Mitte des gebogenen elektrischen Widerstands (21) vertikal aufgehängt ist, so dass dieser das Zubehörteil (1) zur Verteilung von Rauch zumindest teilweise umgibt.

8. Grill (2) nach dem vorhergehenden Anspruch, **dadurch gekennzeichnet, dass** das Aufhängungsmittel mit dem gebogenen elektrischen Widerstand (21) zusammenwirkt, so dass das Zubehörteil (1) zur Verteilung von Rauch in der Mitte der Wanne (22) aufgehängt ist.

9. Grill (2) nach Anspruch 8, **dadurch gekennzeichnet, dass** das Zubehörteil (1) zur Verteilung von Rauch durch eine Klemmmontage des Zubehörteils (1) zur Verteilung von Rauch gegen den gebogenen elektrischen Widerstand (21) aufgehängt ist, so dass die Seitenwand (4) und der gebogene elektrische Widerstand (21) mindestens zwei punktuelle Klemmpunkte (300, 301) umfassen.

10. Grill (2) nach einem der Ansprüche 7 bis 9, **dadurch gekennzeichnet, dass** er eine Abdeckung (24) umfasst, die eingerichtet ist, die Wanne (22) vollständig abzudecken, und wobei die Abdeckung (24) Kiemen (25) aufweist, die symmetrisch positioniert sind, um eine homogenisierte Verteilung des Rauches zu erreichen.

11. Grill (2) nach einem der Ansprüche 7 bis 10, **dadurch gekennzeichnet, dass** er einen Reflektor (27) umfasst; wobei der Reflektor (27) in dem Behälter (22) oberhalb des gebogenen elektrischen Widerstands (21) und unterhalb des Grillrosts (26) positioniert werden kann, um ein indirektes Kochen zu erreichen, oder wobei der Reflektor (27) entfernt werden kann, um ein direktes Kochen von Nahrungsmitteln zu erhalten.

12. Grill (2) nach dem vorhergehenden Anspruch, **dadurch gekennzeichnet, dass** der Reflektor (27) eine konische Form aufweist und in seiner Mitte eine Öffnung (28) umfasst, um Fette, die von auf dem Grillrost (26) positionierten Nahrungsmitteln stammen, zu entfernen, und wobei die Öffnung (28) so dimensioniert ist, dass das Zubehörteil (1) zur Verteilung von Rauch in die Öffnung (28) gelangen kann.

13. Grill (2) nach einem der Ansprüche 7 bis 12, **dadurch gekennzeichnet, dass** die Wanne (22) eine Öffnung (29) am Boden zum Entfernen von Kochfetten aus der Wanne (22) und einen Fettauffangbehälter (30) umfasst, der gegenüber der Öffnung (29) des Bodens positioniert ist.

14. Grill (2) nach einem der Ansprüche 7 bis 13, **dadurch gekennzeichnet, dass** er eine Schutzvorrichtung umfasst, die auf dem Grillrost (26) und über dem Zubehörteil (1) zur Verteilung so positioniert ist, dass die Fette nicht in das Zubehörteil (1) zur Verteilung fließen.

## Claims

1. A smoke-diffusing accessory (1) adapted to work with a barbecue (2), the smoke-diffusing accessory (1) forming a vessel (5) which can contain smoke-generating materials, the smoke-diffusing accessory comprising a lid (6) that engages with the vessel (5) to form a closed enclosure, the lid (6) including calibrated holes (8) in order to regulate oxygen supply in the enclosure, the smoke-diffusing accessory (1) being **characterised in that** it comprises a suspension system configured to vertically suspend the smoke-diffusing accessory (1) in the barbecue (2) so that the calibrated holes (8) are oriented upwards.

2. Smoke-diffusing accessory (1) according to the preceding claim, **characterised in that** the suspension means is positioned on the lid (6).

3. Smoke-diffusing accessory (1) according to the preceding claim, **characterised in that** the lid (6) includes a handle (10) and the suspension means includes two contact points (401, 402) positioned at a base of this handle (10).

4. Smoke-diffusing accessory (1) according to one of claims 1 to 3, **characterised in that** the lid (6) includes a protection device which rises above the lid (6) and which fully covers the calibrated holes (8) so as to prevent grease from penetrating the diffusion accessory (1).

5. Smoke-diffusing accessory (1) according to claim 1, **characterised in that** it comprises a bottom wall (3) and a side wall (4) surrounding the bottom wall (3), and the suspension means is positioned on the side wall (4).

6. Smoke-diffusing accessory (1) according to the preceding claim, **characterised in that** the bottom wall (3) and/or the side wall (4) include openings (9) adapted to regulate the oxygen supply inside the vessel.

7. Barbecue (2) including a bowl (22), an angled electrical resistor (21), a cooking grill (26) positioned above the angled electrical resistor (21) and a smoke-diffusing accessory (1) according to one of the preceding claims, **characterised in that** the smoke-diffusing accessory (1) is suspended vertically by the suspension means below the cooking grill (26), at a centre of the bowl (22), and in the middle of the angled electrical resistor (21), such that the angled electrical resistor surrounds at least in part the smoke-diffusing accessory (1).

8. Barbecue (2) according to the preceding claim, **characterised in that** the suspension means engages with the angled electrical resistor (21) so as to suspend the smoke-diffusing accessory (1) in the centre of the bowl (22).

9. Barbecue (2) according to claim 8, **characterised in that** the smoke-diffusing accessory (1) is suspended by mounting the smoke-diffusing accessory (1) under stress against the angled electrical resistor (21) such that the side wall (4) and the angled electrical resistor (21) include at least two localised attachment points (300, 301).

10. Barbecue (2) according to one of claims 7 to 9, **characterised in that** it comprises a lid (24) adapted to fully cover the bowl (22) and the lid (24) includes openings (25) positioned symmetrically in order to obtain uniform diffusion of the smoke.

11. Barbecue (2) according to one of claims 7 to 10, **characterised in that** it comprises a reflector (27); the reflector (27) being positionable in the bowl (22) above the angled electrical resistor (21) and below the cooking grill (26) so as to obtain indirect cooking, or the reflector (27) being removable so as to obtain direct cooking of the food.

12. Barbecue (2) according to the preceding claim, **characterised in that** the reflector (27) is conical in shape and has an opening (28) in the centre thereof for draining grease coming from food placed on the cooking grill (26), and the opening (28) is sized such that the smoke-diffusing accessory (1) can pass through the opening (28).

13. Barbecue (2) according to one of claims 7 to 12, **characterised in that** the bowl (22) includes an opening (29) at the bottom in order to drain the cooking grease from the bowl (22) and a grease-collecting vessel (30) positioned facing the opening (29) in the bottom.

14. Barbecue (2) according to one of claims 7 to 13, **characterised in that** it comprises a protection device positioned on the cooking grill (26) and above the smoke-diffusing accessory (1) such that the grease does not flow into the diffusion accessory (1).
